# EUROPÄISCHE PATENTSCHRIFT

(11) **EP 3 517 419 B1**
(45) Veröffentlichungstag und Bekanntmachung des Hinweises auf die Patenterteilung: **10.11.2021**
(21) Anmeldenummer: 19153499.9
(22) Anmeldetag: 24.01.2019
(51) Int. Cl.: B62K 19/00, B32B 3/00

(54) **VERFAHREN ZUM ERSTELLEN EINES BRETT- ODER PLATTENARTIGEN BAUELEMENTS**
METHOD FOR PRODUCING A BOARD-LIKE OR PLATE-LIKE COMPONENT
PROCÉDÉ DE PRODUCTION D'UN ÉLÉMENT DE CONSTRUCTION EN FORME DE PLANCHE OU DE PLAQUE

(30) Priorität: 26.01.2018 AT 500712018
(43) Veröffentlichungstag der Anmeldung: 31.07.2019
(73) Patentinhaber: My Esel GmbH, 4050 Traun (AT)
(72) Erfinder: MAYRHOFER, Heinrich, 4924 Waldzell (AT)
(74) Vertreter: Burger, Hannes

(56) Entgegenhaltungen:
- AT-U1- 1 029
- DE-A1-102015 117 868

## Beschreibung

Die Erfindung betrifft ein Verfahren zum Herstellen eines brett- oder plattenartigen Bauelements, insbesondere eines Rahmen-Halbfabrikats, welches beispielsweise zur Ausbildung bzw. Erzeugung eines Fahrradrahmens vorgesehen ist.

Aus dem Stand der Technik ist es bekannt, Plattenelemente aus Holz entlang der äußeren Umrisskontur mit einem sogenannten "Umleimer" bzw. "Anleimer" zu versehen, um so die Schnittflächen bzw. etwaige Stirnholzflächen dieses aus Holz gebildeten Plattenelements zu überdecken. Ein solcher Anleimer kann dabei aus einer Holzleiste oder aus einem dünnen Streifen aus Kunststoff gebildet sein, welche Holzleiste bzw. welcher Kunststoffstreifen an den Schmalflächen des Plattenelements angeleimt oder angeklebt wird. Der Kunststoffstreifen kann dabei auch bandförmig sein und wird in diesem Fall üblicherweise von einer Vorratsspule abgewickelt und in der benötigten Länge abgeschnitten. Mit einem solchen Anleimer bzw. Umleimer soll eine hochwertige Abschlusskante bzw. eine verbesserte Schmalseite an Plattenelementen für den Möbelbau, beispielsweise an Tischplatten oder an Fachböden bzw. Wandelementen von Kästen erreicht werden. Derartige Anleimer bzw. Umleimer können bei rechteckigen Plattenelementen mit vertretbaren Aufwand angebracht werden. Vor allem bei geometrisch aufwändigeren Plattenelementen ist diese Vorgangsweise jedoch wenig zufriedenstellend. In solchen Fällen wird vielmehr dazu übergegangen, das Plattenelement aus Voll- bzw. Massivholz zu bilden, oder einen möglichst homogenen Platten-Werkstoff auszuwählen, um so entsprechend glatte bzw. widerstandsfähige Schnitt- bzw. Schmalflächen an dem herzustellenden Plattenbauteil zu erzielen.

Aus der DE102015117868A1 ist ein Verfahren zur Herstellung eines Fahrradrahmens und ein demgemäß hergestellter Fahrradrahmen bekannt, wobei der Fahrradrahmen aus einem ersten Verbundträger und einem weiteren Verbundträger gebildet ist, welche beiden Verbundträger in Bezug auf die Längsmittelebene des Fahrradrahmens miteinander verbunden sind. Vor allem dann, wenn diese Rahmenkonstruktion aus Holz oder aus einem anderen Feuchtigkeit aufnehmenden Werkstoff besteht, sind unter anderem die Schmalseiten des Rahmens einem mehrmaligen Lackiervorgang zu unterziehen, um eine ausreichend dicke, feuchtigkeitshemmende Lackschicht aufbauen zu können. Bei Verwendung einer Sperrholzplatte oder einer Mehrschicht-Furnierplatte als Ausgangsmaterial für den Fahrradrahmen sind außerdem mehrmalige Schleif- und Lackiervorgänge erforderlich, um die gewünschte Oberflächengüte bzw. eine ausreichende Glattheit der Rahmen-Schmalflächen zu erzielen.

Zudem ist in der DE102015117868A1 ein Verfahren offenbart, bei welchem eine äußere Kohlefaserschicht zur Bildung eines Außengurtes bereitgestellt wird. Darauf wird eine Klebeschicht aufgetragen, weiters wird ein Stützstoff zur Bildung einer Verbindungsschicht bzw. einer Kernschicht positioniert, zudem werden Inlay-Teile oder Verstärkungsteile positioniert, weiters wird eine Klebeschicht aufgetragen und eine innere Platte durch Zentriermittel positioniert. Gegebenenfalls wird der Außenkantenbereich dieses Sandwich-Aufbaus mit dickflüssigem Harzgemisch verfugt. Die Teile dieses Sandwich-Aufbaus werden dann im Vakuumverfahren verklebt und so die definierte Form fixiert.

Die AT1029U1 offenbart ein Verfahren zum Schutz von Kanten bzw. Profilstirnflächen von Bauelementen, insbesondere von Platten oder Trägern, durch Beschichten mit einem härtbaren Beschichtungsmittel, das bei der Härtung eine die Kante bzw. Profilstimfläche schützende Beschichtung ergibt. Dieses Verfahren umfasst folgende Verfahrensschritte: i) Anordnen von zumindest zwei Bauelementen auf einer Unterlage, sodass Kanten bzw. Profilstimflächen davon einander gegenüberliegen, wodurch zwischen gegenüberliegenden Kanten bzw. Profilstirnflächen jeweils ein Kanal gebildet wird; ii) Abdichten des Kanals bzw. der Kanäle an dessen äußerem Ende bzw. deren äußeren Enden durch Verschlusselemente, deren Höhe der gewünschten Beschichtungsfläche entspricht; iii) Ausfüllen des Kanals bzw. der Kanäle mit einem härtbaren Beschichtungsmittel bis zur Höhe der Verschlusselemente; iv) Härten oder Härten lassen des Beschichtungsmittels zu einem thermoplastischen Zwischenzustand; v) Entfernen der Verschlusselemente; vi) Durchtrennen der Beschichtung im thermoplastischen Zustand, vorzugsweise entlang der vertikalen Mittelebene(n) des Kanals bzw. der Kanäle. Mit dem entsprechenden Verfahren können im Baubereich eingesetzte Bauelemente, wie z.B. Deckenträger, Schalungsplatten oder Schaltafeln, welche quadratische oder rechteckige Umfangskontoren aufweisen, mit Schutzelementen geschützt werden, sodass die Ecken und Kanten dieser Bauelemente besser vor Beschädigungen geschützt sind.

Ferner ist es aus dem Stand der Technik bekannt, ein- oder mehrteilige Gussformen aus Metall zu verwenden und anhand des Formhohlraumes der Gussform eine Vielzahl von gießtechnisch herstellbaren Bauteilen mit möglichst gleichbleibender Bauteiltoleranz zu erzeugen. Ein solches Herstellungsverfahren ist nur für eine große Anzahl von größenmäßig stets gleichbleibend herzustellenden Bauteilen geeignet. Vor allem bei Bauteilen, bei welchen der Wunsch nach individuell bzw. spezifisch an die Bedürfnisse eines Benutzers angepassten Dimensionen bzw. Geometrien besteht, sind die aus dem Stand der Technik bekannten Herstellungsmethoden wenig zufriedenstellend. Beispielsweise die Herstellung eines an den jeweiligen Benutzer angepassten Fahrradrahmens ist mit den aus dem Stand der Technik bekannten Vorgangsweisen nur wenig effizient.

Aufgabe der vorliegenden Erfindung war es, die Nachteile des Standes der Technik zu überwinden und ein Verfahren zur Verfügung zu stellen, mit welchem brett- oder plattenartige Bauelemente möglichst flexibel und zugleich rationell gefertigt werden können, wobei die Bauelemente zugleich verbesserte Schmalseiten bzw. möglichst homogene Schmalflächen aufweisen sollen.

Diese Aufgabe wird durch ein Verfahren gemäß den Ansprüchen gelöst. Erfindungsgemäß ist ein Verfahren zum Herstellen eines brett- oder plattenartigen Bauelements vorgesehen, welches die nachfolgend gelisteten Verfahrensschritte umfasst. Das entsprechend hergestellte brett- oder plattenartige Bauelement kann beispielsweise als Tragkörper fungieren und somit ein festigkeits- bzw. steifigkeitsrelevantes Bauelement eines Endprodukts darstellen. Gemäß einer besonders vorteilhaften Anwendung kann das erfindungsgemäß hergestellte, brett- oder plattenartige Bauelement ein Rahmen-Halbfabrikat darstellen, welches insbesondere zur Erzeugung eines Fahrradrahmens vorgesehen sein kann. Das erfindungsgemäße Herstellungsverfahren zur Schaffung des brett- oder plattenartigen Bauelements umfasst folgende Verfahrensschritte:
- Bereitstellen eines Plattenelements mit einander gegenüberliegenden Plattenoberflächen, wobei die Plattenoberflächen vorzugsweise ebenflächig sind oder zumindest annähernd ebenflächig ausgeführt sein können;
- Einbringen oder Einarbeiten von nutartigen Vertiefungen oder Schlitzen in das Plattenelement ausgehend von wenigstens einer der Plattenoberflächen des Plattenelements, wobei ein Verlauf der nutartigen Vertiefungen oder Schlitze im Plattenelement der gewünschten Begrenzungs- oder Umrisskontur oder der benötigten Geometrie des Bauelements entspricht oder zumindest annähernd entspricht, insbesondere Ausschneiden oder Ausfräsen von individuell verlaufenden, nutartigen Vertiefungen bzw. Schlitzen in das Plattenelement, wobei die Umrisskonturen bzw. Verläufe der nutartigen Vertiefungen oder Schlitze einer Rahmengeometrie mit vielfältigen Konturverläufen bzw. Umrissformen entsprechen oder zumindest annähernd entsprechen können;
- zumindest teilweises Befüllen oder vollständiges Ausfüllen der nutartigen Vertiefungen oder Schlitze mit einer im Verarbeitungszustand fließfähigen oder pastösen, nachfolgend aushärtenden oder aushärtbaren und dabei an den Begrenzungsflächen der nutartigen Vertiefungen oder Schlitze anhaftenden Füll- oder Klebemasse;
- aktives Herstellen oder passives Abwarten eines zumindest teilweise erhärteten Zustandes der Füll- oder Klebemasse, sodass die Füll- oder Klebemasse eine Füllschicht bzw. eine Zusatzschicht aus teilweise erhärtetem oder festem Kunststoff in den nutartigen Vertiefungen oder Schlitzen ausbildet, insbesondere in Art einer Gieß- oder Versiegelungsschicht in den nutartigen Vertiefungen oder Schlitzen des Plattenelements;
- Entfernen bzw. Abtrennen jener Plattenabschnitte, welche keinen Bestandteil des gewünschten bzw. benötigten, herzustellenden Bauelements darstellen, insbesondere Abschneiden oder Wegfräsen jener Plattenabschnitte des Plattenelements, welche nicht als Bestandteil des herzustellenden Bauelements gelten, wobei die Entfernung nicht benötigter Plattenabschnitte derart vorgenommen wird, dass die zumindest teilweise erhärtete Füllschicht bzw. Zusatzschicht in den nutartigen Vertiefungen oder Schlitzen zumindest in Teilabschnitten der benötigten Begrenzungs- oder Umrisskontur des herzustellenden Bauelements erhalten bleibt und am herzustellenden Bauelement eine äußere Begrenzungsschicht ausbildet.

Ein Vorteil der erfindungsgemäßen Maßnahmen liegt darin, dass dadurch hinsichtlich ihrer äußeren und/oder inneren Umfangsabschnitte relativ stark konturierte Bauelemente geschaffen werden können, welche zumindest in Teilabschnitten ihres Umfanges oder auch über ihren gesamten Umfang eine Beschichtung bzw. eine Begrenzungsschicht in Art eines Anleimers aufweisen, wobei diese Anbringung besonderes effizient bzw. rationell und prozesssicher umgesetzt werden kann. Insbesondere können dadurch brett- bzw. plattenartige Bauteile mit hoher Vielfalt hinsichtlich Geometrien, Formen und Dimensionen geschaffen werden, welche Bauteile an den Schmalseiten beschichtet bzw. versiegelt sind. Es können dadurch sogar fachwerksähnliche Bauelemente bzw. Tragstrukturen in der sogenannten "Losgröße Eins" bzw. in relativ geringen Stückzahlen auf vergleichsweise rationelle Art und Weise geschaffen werden. Die Begrenzungsschicht an den Schmalseiten bzw. Schmalflächen des Bauelements wird dabei quasi angegossen, wobei das ursprüngliche Plattenelement bzw. Halbfabrikat mit den darin eingearbeiteten Nuten bzw. Schlitzen gewissermaßen eine Einweg-Gießform bzw. eine temporäre Gießform für die spätere Begrenzungsschicht darstellt. Diese quasi "verlierbare" Gießform ist dabei relativ rationell bzw. wirtschaftlich erzeugbar. Im Vergleich zu bekannten Anklebevorgängen von Streifen- oder Leistenmaterial oder im Vergleich zu einer Mehrzahl von aufeinanderfolgenden Lackier- und Schleifvorgängen, um so eine glatte bzw. möglichst feuchtigkeitsresistente Schmalseite des Bauelements zu erzielen, ermöglicht das erfindungsgemäße Vorgehen eine vergleichsweise rasche und besonders qualitative Anbringung von Kanten- bzw. Schmalseitenversiegelungen an brett- bzw. plattenartigen Bauelementen. Dies insbesondere dann, wenn der Konturverlauf bzw. die Umrissgeometrie des herzustellenden Bauteils komplex ist bzw. wenn relativ enge Übergangsradien vorliegen und/oder wenn aufgrund von Durchbrüchen im Bauelement innenliegende, zu beschichtende bzw. zu versiegelnde Schmalflächen (Schmalseiten) vorhanden sind.

Die anspruchsgemäß geschaffenen Bauteile können insbesondere als Rahmenteile für Fahrzeuge, beispielsweise für Fahrräder, verwendet werden. Sie können aber auch als Tragelemente bzw. als formkomplexe Tragwerke dienen, als tragende bzw. statisch mitbestimmende Bestandteile von Maschinen fungieren, für die Ausbildung von Sport- bzw. Freizeitgeräten herangezogen werden, oder ein sonstiger Bestandteil von Werkzeugen und Hilfsmaterialien sein. Ein anspruchsgemäß erhaltenes

Bauelement kann aber auch für anderweitige Produkte mit bestimmten Anforderungen an deren Belastbarkeit, Leichtgewichtigkeit, Robustheit und zugleich erhöhten Anforderungen an die Individualität oder Gestaltbarkeit der Geometrie, insbesondere in Bezug auf Form und Abmessungen, eingesetzt werden.

Gemäß einer vorteilhaften Maßnahme kann vorgesehen sein, dass mittels einer programmgesteuerten Schneid- oder Fräsmaschine oder mittels einem ein Bearbeitungswerkzeug führenden Industrieroboter individuell veränder- oder anpassbare Verläufe der nutartigen Vertiefungen oder Schlitze im Plattenelement hergestellt werden. Vor allem dadurch können individuell geformte bzw. spezifisch dimensionierte Bauelemente in möglichst wirtschaftlicher und rationeller Art und Weise gefertigt werden. Insbesondere können dadurch Rahmenelemente eines Fahrrades hinsichtlich ihrer Geometrie bzw. Abmessungen besonders einfach und effizient an die individuellen Bedürfnisse bzw. Wünsche eines Benutzers angepasst werden. Beispielsweise ist so eine Anpassung der Geometrie bzw. Abmessungen eines Fahrradrahmens an die die Physiologie bzw. an die individuellen Köperabmessungen eines Endbenutzers rationell und zugleich unter Erfüllung hoher Qualitätsanforderungen an das Rahmen-Bauelement ermöglicht. Demzufolge können gewissermaßen "maßgeschneiderte" Bauelemente relativ wirtschaftlich und in hoher Qualität bzw. mit verbesserter Beständigkeit gegen Witterungseinflüsse angefertigt werden.

Entsprechend einem vorteilhaften Verfahrensschritt können mittels einer programmgesteuerten Schneid- oder Fräsmaschine oder mittels einem ein Bearbeitungswerkzeug führenden Industrieroboter relativ produktive und zugleich kostengünstige Schneid- oder Fräsvorgänge zum Entfernen bzw. Abtrennen jener Plattenabschnitte ausgeführt werden, welche nicht als Bestandteil des herzustellenden Bauelements bzw. Rahmen-Halbfabrikats gelten, wobei der Schneid- oder Fräsvorgang zumindest abschnittsweise innerhalb der durch die Füll- oder Klebemasse definierten Umgrenzungs- bzw. Füllschicht ausgeführt wird. In Abhängigkeit des Platten- bzw. Füllmaterials sind in der Regel Fräsvorgänge zu bevorzugen. Zum Entfernen bzw. Wegschneiden von Plattenabschnitten, welche letztendlich nicht zum herzustellenden Bauelement zählen, sind gegebenenfalls auch Laserstrahl- oder Wasserstrahlschneidprozesse, oder auch sonstige Schneidvorgänge einsetzbar. Der jeweilige Abschneide- bzw. Fräsvorgang kann dabei durch Einsatz einer numerisch gesteuerten Maschine besonders exakt und rasch ausgeführt werden.

Zweckmäßig kann es auch sein, wenn im Zuge der Entfernung nicht benötigter Plattenabschnitte, oder im Zuge eines gesonderten Verfahrensschrittes, räumlich geformte, beispielsweise bombierte, Begrenzungsflächen an der äußeren Begrenzungsschicht hergestellt werden, insbesondere durch Fräs-, Schneid- und/oder Schleifvorgänge erzeugt werden. Dadurch werden mehrere Bearbeitungsschritte auf praktikable Art und Weise kombiniert bzw. zusammengelegt, wodurch die Effizienz des Herstellungsverfahrens nochmals gesteigert werden kann. Darüber hinaus kann dadurch die äußere Begrenzungsschicht an den Schmalflächen des Bauelements mit vielfältigen, für die jeweilige Verwendung optimierten Querschnittsgeometrien hergestellt werden und/oder die jeweils gewünschte bzw. erforderliche Oberflächenbeschaffenheit erhalten.

Entsprechend einer zweckmäßigen Ausführungsform wird ein mehrschichtiges Plattenelement als Ausgangsprodukt für die Schaffung des angegebenen Bauelements bereitgestellt. Insbesondere kann das Plattenelement als Mehrschicht-Verbundplatte mit Schichten ausgewählt aus der Gruppe umfassend Holz, Schaumkunststoff, Hartkunstoff und Carbonfasern ausgeführt sein. Dadurch können relativ leichte und zugleich möglichst feste bzw. stabile und vor äußeren Umwelteinflüssen, wie zum Beispiel Feuchtigkeit oder UV-Einwirkung, gut geschützte Bauelemente hergestellt werden. Beispielsweise kann die wenigstens eine Kernschicht des Plattenelements aus einem Material mit relativ geringer Dichte, beispielsweise aus einem Schaumkunststoff, gebildet sein. Die wenigstens eine Deckschicht bzw. Decklage des Plattenelements kann aus einem Material mit vergleichsweise hoher Dichte, beispielsweise aus Holz, Kunststoff oder Carbonfasern, gebildet sein. Eine derartige Verbundplatte bzw. ein solches Sandwich- bzw. Compound-Element kann optimierte Eigenschaften hinsichtlich ihrer Masse, ihrer mechanischen Belastbarkeit und/oder ihrer Robustheit gegenüber Umwelteinflüssen oder sonstigen äußeren Einflüssen erreichen.

Entsprechend einem vorteilhaften Aspekt des angegebenen Herstellungsverfahrens wird basierend auf den Begrenzungsflächen der nutartigen Vertiefungen oder Schlitze eine temporäre Einweg-Gießform geschaffen, in welche nachfolgend bzw. zu einem späteren Zeitpunkt die Füll- oder Klebemasse eingegossen wird. Dies ermöglicht ein exaktes, prozesssicheres und zugleich rasches bzw. effizientes Anbringen einer Versiegelungs- bzw. Begrenzungsschicht an den Schmalflächen von brett- bzw. plattenartigen Bauelementen. Darüber hinaus können die Umrisse bzw. die äußeren und/oder inneren Begrenzkonturen solcher Bauelemente auch stark abgewinkelte Verläufe bzw. enge Radien aufweisen, ohne dadurch Probleme mit der Haftfestigkeit zu haben oder Schwierigkeiten bei der Anbringung der schmalseitigen Versiegelungs- bzw. Begrenzungsschicht auf sich nehmen zu müssen.

Zweckmäßig ist es, wenn als Füll- oder Klebemasse ein Kunststoffmaterial ausgewählt aus der Gruppe umfassend Epoxidharze, PU-Harze, Polyesterharze und schäumbare Harze, insbesondere PU-Schäume, eingesetzt wird. Derartige Materialien bzw. Werkstoffe können im Verarbeitungszustand ausreichend fließfähig bzw. pastös sein, um möglichst rasch, einfach und formfüllend in die nutartigen Vertiefungen bzw. Schlitze eingebracht werden zu können. Darüber hinaus können diese Materialien bzw. Werkstoffe im ausgehärteten bzw. festen Zustand zahlreiche Anforderungen, wie zum Beispiel Schlagfestigkeit, Kratzfestigkeit, Oberflächengüte, Anhaftungsvermögen, Bearbeitbarkeit mit Schneid- oder Fräswerkzeugen, farbliches oder gestalterisches Erscheinungsbild, angenehme Haptik, und dergleichen, gut erfüllen.

Gemäß einer Weiterbildung ist es möglich, dass zumindest in Übergangsabschnitten zwischen der durch die Füll- oder Klebemasse gebildeten, äußeren Begrenzungsschicht und den Seitenflächen bzw. den seitlichen Oberflächen des Bauelements zusätzliche Schleif-, Schneid- und/oder Fräsvorgänge ausgeführt werden, sodass geglättete, kantenfreie und/oder stufenlose Materialübergänge ausgebildet werden. Dadurch können auch bei geringfügig schwankenden Dickenabmessungen des Platenelementes und bei der Ausführung von Fräsvorgängen zur Erzielung von abgerundeten Übergängen bzw. Kanten des Bauelements möglichst homogen bzw. gleichförmig wirkende Kantenverläufe erzielt werden. Gegebenenfalls kann dadurch auch die Beschaffenheit der Seitenflächen bzw. die Oberflächengüte der Breit- bzw. Flachseiten des Bauelements beeinflusst, insbesondere verbessert werden.

Durch das erfindungsgemäße Verfahren kann ein brett- oder plattenartiges Bauelement ausgebildet werden, welches ein Rahmen-Halbfabrikat darstellen kann und in weiterer Folge zur Ausbildung eines Fahrradrahmens vorgesehen sein kann. Dieses brett- oder plattenartige Bauelement umfasst einen aus einem Ausgangs-Plattenelement gebildeten Tragkörper. Dieser Tragkörper kann rahmenartig ausgeführt sein oder die Struktur eines Tragwerks aufweisen und somit wenigstens einen Durchbruch innerhalb des Tragkörpers aufweisen. Die seitlichen, einander gegenüberliegenden Oberflächen, insbesondere die Breitseiten bzw. Seitenflächen des Tragkörpers sind durch Teilbereiche der Flachseiten des ursprünglichen Plattenelements (Ausgangs-Plattenelement) gebildet und die Schmalflächen des Tragkörpers sind durch die Dicke des Ausgangs-Plattenelements definiert bzw. ist die Breite der Schmalflächen durch die Plattenstärke des Ausgangs-Plattenelements bestimmt. Der Tragkörper weist dabei in Bezug auf seine Seitenansicht eine Begrenzungs- oder Umrisskontur auf, die durch eine Mehrzahl von geradlinig und/oder gekrümmt verlaufenden Konturabschnitten zusammengesetzt bzw. definiert ist. Dabei ist zumindest in einzelnen Abschnitten oder innerhalb des gesamten Verlaufes der Begrenzungs- oder Umrisskontur des Tragkörpers eine Begrenzungsschicht aus Kunststoffmaterial ausgebildet. Diese Begrenzungsschicht ist durch Angießen oder Aufbringen einer im Verarbeitungszustand fließfähigen oder pastösen, nachfolgend aushärtenden oder aushärtbaren Füll- oder Klebemasse an den Schmalflächen des Tragkörpers aufgebaut bzw. hergestellt. Diese an den Schmalflächen des Tragkörpers angegossene oder aufgebrachte Füll- oder Klebemasse ist nach einer zumindest teilweisen Erhärtung oder Aushärtung der Füll- oder Klebemasse durch Fräs-, Schneid- und/oder Schleifvorgänge hinsichtlich ihrer Oberflächenbeschaffenheit bearbeitet und/oder hinsichtlich ihrer Querschnittsgeometrie modelliert worden, sodass zumindest in einzelnen Umfangsabschnitten oder über den gesamten Umfangsabschnitt des Tragkörpers, insbesondere an den Schmalflächen des brett- oder plattenartigen Bauelements, eine Versiegelungs- bzw. Begrenzungsschicht ausgebildet ist.

Ein Vorteil des erfindungsgemäß hergestellten, im wesentlichen brett- oder plattenförmig ausgebildeten Bauteils liegt darin, dass dieses relativ komplexe Umrisse bzw. Verläufe aufweisen kann und dabei trotzdem eine hochqualitative, durchgängige oder auch eine nur partielle Beschichtung bzw. Versiegelung an dessen Schmalflächen aufweisen kann. Insbesondere ist auch an engen Stellen und sogar an Stellen mit Hinterschneidungen bzw. Einbuchtungen in Bezug auf die Geometrie des herzustellenden Bauelements eine zuverlässige Kantenversiegelung bzw. Schmalflächenbeschichtung möglich. Die entsprechende Beschichtung bzw. Versiegelung kann dabei relativ rationell und auch prozessstabil aufgebracht werden. Ein Vorteil des erfindungsgemäß geschaffenen Bauelements liegt weiters darin, dass sogar besonders geringe Stückzahlen, insbesondere in der sogenannten "Losgröße Eins", rationell und in hoher Qualität geschaffen werden können. Dies ist insbesondere in Verbindung mit individuell bzw. maßspezifisch anzufertigenden Bauelementen von besonderem Vorteil.

Die zur Herstellung des brett- oder plattenartigen Bauelements verwendete Füll- oder Klebemasse kann eingefärbt sein, oder mit einem aus einer Palette von Farbstoffen ausgewählten Farbstoff versetzt sein. Dadurch kann Anforderungen an die Individualität bzw. Unterscheidbarkeit eines herzustellenden Produkts möglichst wirtschaftlich Rechnung getragen werden.

Besonders vorteilhafte Einsatzgebiete des angegebenen Verfahrens und vorteilhafte Verwendungen des brett- oder plattenartig ausgeführten Bauelements liegen im Bereich von individuell bzw. in Kleinserie anzufertigenden Sport- oder Freizeitartikeln, wie zum Beispiel Fahrradrahmen, oder auch in Fahrzeugen für Kinder. Insbesondere eignet sich das brett- oder plattenartige Bauelement als Vorprodukt oder Halbfabrikat zur Herstellung von Fahrradrahmen, oder von Fahrzeugen für Kinder. Die zuvor angegebenen, vorteilhaften Wirkungen sind aber auch bei sonstigen Bauteilen bzw. Produkten mit dem Wunsch nach möglichst individueller Anfertigung bzw. nahezu frei wählbarer Geometrie bzw. Dimension erzielbar, wie zum Beispiel für Designelemente, architektonische Elemente, oder Raumelemente. Beispielsweise Design- oder Werbeelemente, welche die Konturen von Logos oder sonstigen Grafiken zeigen, können vorteilhaft angefertigt werden. Die mit dem angegebenen Verfahren hergestellten, brett- oder plattenartigen Bauelemente können selbstverständlich auch durch Fertigteile bzw. Endprodukte definiert sein, welche nach Ausführung der angegebenen Verfahrensschritte unmittelbar nutzbar bzw. einsatzbereit sind.

Zum besseren Verständnis der Erfindung wird diese anhand der nachfolgenden Figuren näher erläutert.

Es zeigen jeweils in beispielhafter und stark vereinfachter, schematischer Darstellung:
- Fig. 1: eine Vorrichtung zur Einbringung von nutartigen Vertiefungen oder Schlitzen in ein Plattenelement in Ansicht von oben;
- Fig. 2: die Vorrichtung nach Fig. 1 in Seitenansicht;
- Fig. 3: eine Vorrichtung bzw. ein Werkzeug zur Einbringung von Füll- oder Klebemasse in die nutartigen Vertiefungen oder Schlitze des Plattenelements gemäß den Fig. 1, 2;
- Fig. 4: eine Vorrichtung bzw. Verfahrens schritte zur Entfernung bzw. Abtrennung von Plattenabschnitten an dem Plattenelement gemäß Fig. 3;
- Fig. 5: eine Vorrichtung bzw. Verfahrens schritte zur zumindest teilweisen Auffüllung von schlitzartigen Durchbrüchen in einem Plattenelement mit einer Füll- oder Klebemasse;
- Fig. 6: ein weiteres Plattenelement mit einer zumindest teilweise erhärteten Füll- oder Klebemasse im Querschnitt;
- Fig. 7: ein anderes Plattenelement mit konturierten Begrenzungsflächen des darin eingearbeiteten Schlitzes;
- Fig. 8a: eine Vorrichtung bzw. Verfahrens schritte zur Herstellung von nutartigen Vertiefungen in einem Plattenelement;
- Fig. 8b: das Plattenelement gemäß Fig. 8a nach dem Auffüllen der nutartigen Vertiefungen mit einer Füll- oder Klebemasse;
- Fig. 8c: das Plattenelement gemäß Fig. 8c im zumindest teilweise erhärteten Zustand der Füll- oder Klebemasse und eine mögliche Querschnittskontur der Begrenzungsschicht des herzustellenden Bauelements;
- Fig. 9: ein verfahrensgemäß herstellbares, brett- oder plattenartiges Bauelement mit an dessen Schmalseiten ausgebildeten, äußeren und inneren Begrenzungsschichten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

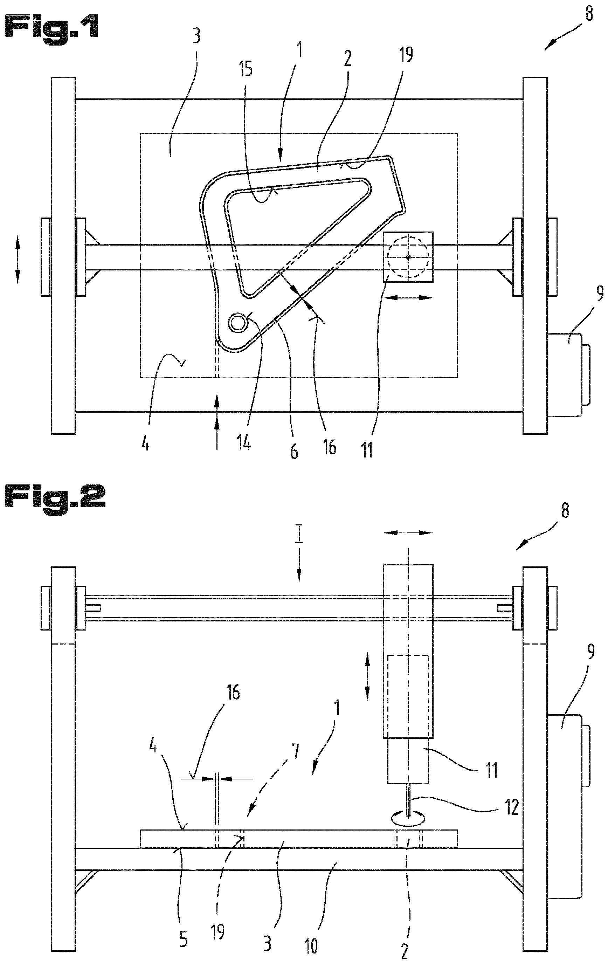

In den Fig. 1, 2 ist ein Ausführungsbeispiel einer Anordnung bzw. Vorrichtung schematisch gezeigt, welche zur Herstellung eines im Wesentlichen brett- oder plattenartigen Bauelements 1 eingesetzt werden kann. Die hier dargestellte Vorrichtung führt dabei nur einzelne der insgesamt erforderlichen bzw. zweckmäßigen Bearbeitungs- bzw. Herstellungsschritte zur Erzeugung des Bauelements 1 aus. Das heißt es sind weitere Vorrichtungen bzw. Maschinen und/oder manuelle Bearbeitungsschritte erforderlich, um ein Bauelement 1 in der gewünschten Endausführung schaffen zu können. Insbesondere können auch Dosieranlagen, Mischanlagen, Sprüh- bzw. Lackiervorrichtungen, Bohrvorrichtungen und dergleichen erforderlich sein, um das gewünschte Endprodukt maschinenunterstützt und/oder manuell herstellen zu können. Im dargestellten Ausführungsbeispiel ist das herzustellende brett- oder plattenartige Bauelement 1 durch ein Halbfabrikat gebildet, insbesondere durch ein Rahmen-Halbfabrikat 2 definiert, welches besonders geeignet ist, einen Rahmen für ein Fahrrad auszubilden. Hierfür ist der nachfolgend beschriebene Herstellungsvorgang zur Schaffung des Rahmen-Halbfabrikats 2 jedoch weiteren Bearbeitungsschritten zu unterziehen, wie zum Beispiel Schleifvorgängen, Lackiervorgängen, Bohrvorgängen, Montagevorgängen und dergleichen.

Im dargestellten Ausführungsbeispiel ist das Rahmen-Halbfabrikat 2 im Wesentlichen dreieckförmig ausgeführt und kann so die Grundlage für einen herzustellenden Fahrrad-Hauptrahmen darstellen. Das Rahmen-Halbfabrikat 2 kann aber auch im Wesentlichen L-förmig oder in Form eines Parallellogramm ausgeführt sein bzw. ein sonstige, zweckmäßige Geometrie aufweisen.

Beispielsgemäß wird nur ein einziges brett- oder plattenartiges Bauelement 1 aus einem bereitgestellten, im Wesentlichen ebenflächigen Plattenelement 3 erzeugt. Selbstverständlich ist es auch möglich, aus einem bereitgestellten Plattenelement 3 eine Mehrzahl von herzustellenden Bauelementen 1 zu erzeugen. So ist es beispielsweise möglich, die in Bezug auf ihren Umriss im Wesentlichen dreieckförmigen Bauelemente 1 derart anzuordnen, dass eine möglichst umfassende Nutzung der verfügbaren Fläche des beispielsgemäß rechteckigen Plattenelements 3 erreicht wird. Hierzu können beispielsweise die herzustellenden Bauelemente 1 derart angeordnet werden, dass eine möglichst optimierte Ausnutzung der Fläche des Plattenelements 3 erreicht wird. Insbesondere ist es zweckmäßig, eine möglichst verschnitt- bzw. verlustarme Nutzung eines verwendeten Plattenelements 3 anzustreben. Anstelle des im Wesentlichen rechteckigen Plattenelements 3 ist es selbstverständlich auch möglich, hinsichtlich der Umrissform andere Geometrien des zu bearbeitenden Plattenelements 3 zu verwenden, um eine hinsichtlich Verschnitt optimierte Bearbeitung zu gewährleisten. Insbesondere kann ein bereitgestelltes Plattenelement 3 hinsichtlich seiner Außenkontur zumindest bereichs- bzw. abschnittsweise an die letztendliche Außenkontur des herzustellenden Bauelements weitgehendst angepasst sein, d.h. ein nur relativ geringes Übermaß aufweisen. Das vorgefertigte bzw. bereitgestellte Plattenelement 3 kann insbesondere ein sogenanntes Halbzeug darstellen, also eine vorgefertigte Rohmaterialform für das herzustellende, brett- oder plattenartige Bauelement 1 sein. Insbesondere kann der Zuschnitt des bereitgestellten Plattenelements 3 einer Verschnittplanung zur Optimierung der später abzutrennenden Plattenabschnitte unterliegen.

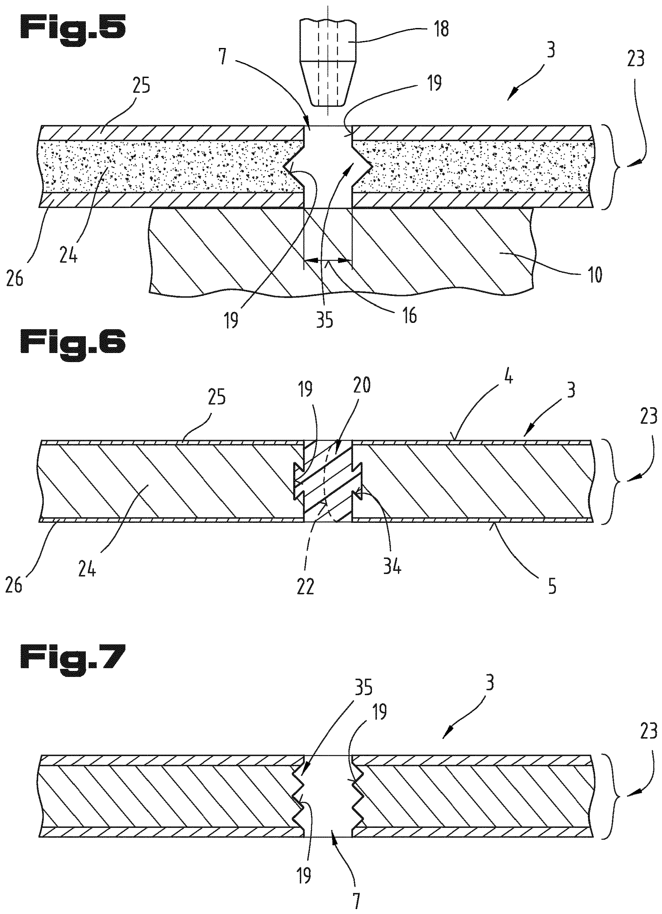

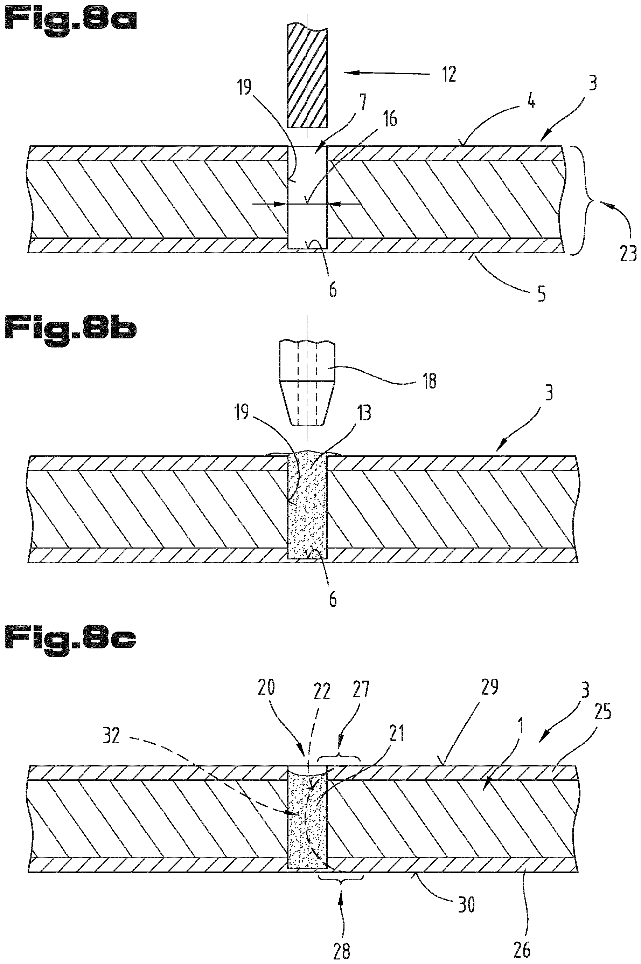

Wie in den Fig. 1 und 2 beispielhaft dargestellt, werden in das zur Verarbeitung bereitgestellte Plattenelement 3, welches bevorzugt ebene, einander gegenüberliegende Plattenoberflächen 4, 5 aufweist, nutartige Vertiefungen 6 (Fig. 1; Fig. 8a) bzw. Schlitze 7 (Fig. 2; Fig. 5) eingebracht bzw. eingearbeitet.

Das bereitgestellte Plattenelement 3 kann dabei im Wesentlichen glatte Plattenoberflächen 4, 5 und/oder strukturierte Plattenoberflächen 4, 5 aufweisen. Insbesondere kann das bereitgestellte, zu bearbeitende Plattenelement 3 vollkommen glatt bzw. beschichtet sein und/oder gewünschte Oberflächenstrukturen aufweisen. Zweckmäßig ist es dabei, wenn das Plattenelement 3 eine weitestgehend bzw. möglichst gleich bleibende Plattenstärke bzw. Dicke aufweist. Dadurch können herzustellende Bauelemente 1 rationell und einfach geschaffen werden. Es ist aber auch möglich, dass das bereitgestellte Plattenelement 3 variierende Dickenverläufe aufweist, sodass das herzustellende Bauelement 1 in einzelnen Bereichen vergleichsweise dicke Bauteilabschnitte ausbildet und in anderen Teilabschnitten vergleichsweise dünne bzw. schmale Bauteilabschnitte aufweist. Insbesondere können dadurch hinsichtlich ihrer Stärke bzw. Dicke abschnittsweise variierende, im Wesentlichen brett- oder plattenartige Bauelemente 1 geschaffen werden. Dadurch können statische Optimierungen erreicht werden, insbesondere hinsichtlich der letztendlichen Masse und Belastbarkeit eines herzustellenden, lasttragenden Bauelements 1.

Das Einbringen bzw. Einarbeiten, vorzugsweise das Ausschneiden bzw. Ausfräsen, von individuell bzw. relativ frei gestaltbaren, nutartigen Vertiefungen 6 bzw. Schlitzen 7 erfolgt ausgehend von wenigstens einer der Plattenoberflächen 4, 5 des bereitgestellten Plattenelements 3. Gegebenenfalls ist es auch möglich, die entsprechende Bearbeitung ausgehend von beiden Seiten des Plattenelements 3 durchzuführen bzw. wechselweise an den einander gegenüber liegenden Plattenoberflächen 4, 5 auszuführen. Anstelle der vorzugsweise eingesetzten Fräs- bzw. Schneidvorgänge gegenüber dem Plattenelement 3 ist es auch denkbar, Laserschneidprozesse, Wasserstrahlschneidprozesse, oder sonstige aus dem Stand der Technik bekannte Schneidvorgänge auszuführen, um im Plattenelement 3 die jeweils gewünschten Verläufe der nutartigen Vertiefungen 6 bzw. Schlitze 7 zu erzielen. Insbesondere soll dabei ein Verlauf der nutartigen Vertiefungen 6 bzw. Schlitze 7 im Plattenelement 3 der letztendlich gewünschten bzw. benötigten Begrenzungs- oder Umrisskontur oder der benötigten Geometrie, beispielsweise einer Rahmengeometrie, des herzustellenden Bauelements 1 bzw. Rahmen-Halbfabrikats 2 entsprechen oder zumindest annähernd entsprechen.

Die Einarbeitung der entsprechenden Konturen bzw. Verläufe in das Plattenelement 3 erfolgt zweckmäßigerweise mittels einer programmgesteuerten Schneid- oder Fräsmaschine 8. Alternativ ist es selbstverständlich auch möglich, einen Industrieroboter einzusetzen, welcher geeignete Bearbeitungswerkzeuge programmgesteuert bewegt bzw. führt, um so die jeweils gewünschten bzw. benötigten Verläufe der nutartigen Vertiefungen 6 bzw. Schlitze 7 im Plattenelement 3 herzustellen. Die programmgesteuerte Schneid- oder Fräsmaschine 8 bzw. ein dementsprechender Industrieroboter weist, wie an sich bekannt, eine elektronische Steuervorrichtung 9 auf, in welcher die jeweiligen Bewegungs-Steuerdaten hinterlegt und nachfolgend abgerufen werden können. Gemäß einer zweckmäßigen Ausführungsform kann dabei die gewünschte, herzustellende Rahmen- bzw. Bauelement-Geometrie auch von einem CAD-Programm übernommen bzw. abgeleitet werden, sodass eine besonders rationelle und rasche Herstellung von individuell bzw. maßspezifisch anzufertigenden Bauelementen 1 ermöglicht ist. Im dargestellten Ausführungsbeispiel ist die Schneid- oder Fräsmaschine 8 durch eine programmgesteuerte Maschine bzw. eine CNC-Maschine gebildet und hierbei als Portal-Fräsmaschine ausgeführt. Dementsprechend ist das zu bearbeitende Plattenelement 3 auf einem Maschinentisch 10 abgelegt und kann in weiterer Folge vom bewegungsgesteuerten Bearbeitungskopf 11, welcher insbesondere ein drehbar gelagertes bzw. ein drehbeweglich antreibbares Fräswerkzeug 12 umfasst, bearbeitet werden. Mit einer solchen Schneid- oder Fräsmaschine 8 bzw. einem programmgesteuerten Industrieroboter lassen sich nahezu beliebige Umrisse bzw. innenliegende und äußere Verläufe (Konturen) in Bezug auf das herzustellende Bauelement 1 bzw. Rahmen-Halbfabrikat 2 erzeugen.

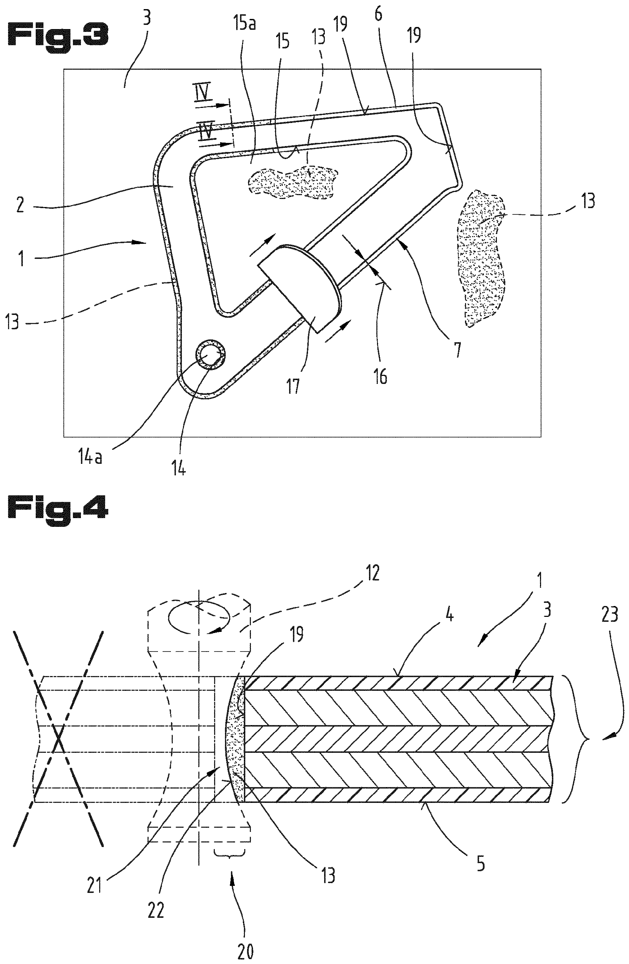

Wie aus den weiteren Darstellungen zu entnehmen ist, können die nutartigen Vertiefungen 6 defacto in Form einer Nut ausgeführt sein (Fig. 8a). Das heißt, dass dadurch eine vollständige Trennung bzw. Aufteilung des Plattenelements 3 in separate Teile vermieden ist und das Plattenelement 3 somit auch nach dem Schneid- bzw. Fräsvorgang einteilig bleibt. Alternativ ist es auch möglich, das Plattenelement 3 derart zu bearbeiten, dass in Bezug auf die einander gegenüberliegenden Plattenoberflächen 4, 5 durchgehende Schlitze 7 ausgebildet sind, also schlitzartige Durchbrüche erzeugt werden (Fig. 2; Fig. 5). Dadurch kann sich eine Separierung des bereitgestellten Plattenelements 3 in einzelne Plattenabschnitte bzw. Plattenteile einstellen. In diesem Fall kann es zweckmäßig sein, die Plattenteile bzw. Plattenabschnitte beispielsweise durch Klemmungen, durch Greifer, oder durch sonstige Halteflächen in ihrer Relativposition zueinander zu sichern, sodass deren Relativposition zueinander nach der Herstellung der Schlitze 7 unverändert bleibt, zumindest bis die in Fig. 3 veranschaulichte Füll- oder Klebemasse 13 eingebracht ist und vorzugsweise zumindest teilweise erhärtet ist. Anstelle der Verwendung von Halte- bzw. Positioniermitteln, welche die gewünschte Relativposition der Plattenteile nach dem Schneiden bzw. Schlitzen des Plattenelements 3 gewährleisten, ist es auch möglich, die gewünschte bzw. zuvor erzeugte Relativposition zwischen den einzelnen Plattenteilen durch relativ vorsichtige Bewegungen bzw. durch Einhaltung von niedrigen Beschleunigungen beim Transport der Plattenteile auf dem Maschinentisch 10 oder auf einer sonstigen Auflage bzw. Unterlage zu erreichen. Insbesondere ist es zweckmäßig, wenn eine Breite 16 der hergestellten Schlitze 7 (Fig. 2) zwischen den einzelnen Plattenteilen beim allfälligen Bewegen bzw. Transportieren des zerteilten Plattenelements 3 vor der Einbringung der Füll- oder Klebemasse 13 nicht verändert wird. Es ist aber auch möglich, eine Abfolge von nutartigen Vertiefungen 6 und durchgängigen Schlitzen 7 (schlitzartigen Durchbrüchen) in das Plattenelement 3 einzuarbeiten. Das heißt, das Plattenelement 3 kann auch derart bearbeitet werden, dass überwiegend durchgehende Schlitze 7 ausgeführt sind, dass jedoch in einzelnen Abschnitten ein schmaler Verbindungssteg in Art einer Perforation bestehen bleibt, wodurch ein gewisser Zusammenhalt und die Relativposition der einzelnen Plattenabschnitte gewährleistet bleibt.

Beim dargestellten Ausführungsbeispiel gemäß Fig. 1 weist das herzustellende Bauelement 1 bzw. Rahmen-Halbfabrikat 2 innerhalb seiner Außenkonturen wenigstens einen Durchbruch 14, 15 auf. Dadurch kann das Bauelement 1 beispielsweise eine rahmenartige Struktur erhalten, welche aus winkelig zueinander verlaufenden Streben bzw. Rahmenabschnitten zusammengesetzt sein kann. Der in den Fig. 1 und 3 schematisch dargestellte Durchbruch 14 innerhalb der Außenkonturen des Rahmen-Halbfabrikats 2 kann als Aufnahme für die Lagerung einer Tretkurbel eines Fahrrades fungieren. Demgemäß weist dieser Durchbruch 14 einen relativ kleinen bzw. engen Durchmesser auf.

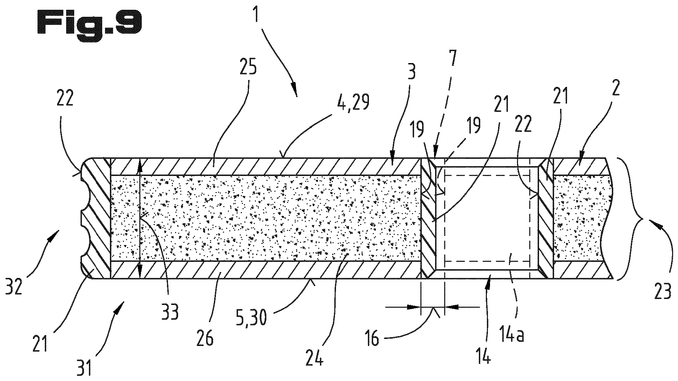

Mittels einem beispielsweise stiftförmigen bzw. zylindrischen Fräswerkzeug 12 kann dieser kreisförmige Durchbruch 14 derart erzeugt werden, dass anfänglich nur seine Umgrenzungskontur geschaffen ist und ein innenliegender, zylindrischer bzw. in Draufsicht kreisförmiger Kernteil 14a im Plattenelement 3 bestehen bleibt, wie dies aus den Fig. 1 und 3 ersichtlich ist. Es wird vorerst also nur die äußere Kontur des späteren Durchbruches 14 (Fig. 9) in das Plattenelement 3 eingearbeitet, indem eine nutartige Vertiefung 6 bzw. ein durchgängiger, relativ schmaler Schlitz 7 in das Plattenelement 3 eingearbeitet wird. Analog dazu kann vorgesehen sein, dass vorzugsweise bei sämtlichen, innen liegenden Konturen bzw. Durchbrüchen 15 der jeweilige Kernabschnitt 15a innerhalb des Plattenelements 3 (Fig. 1, Fig. 3) bestehen bleibt bzw. an der jeweiligen Stelle verbleibt, sodass damit eine quasi verlierbare Einmal-Gießform bzw. eine temporäre Einweg-Gießform geschaffen ist. Insbesondere wird im Zuge der Einarbeitung der nutartigen Vertiefungen 6 bzw. Schlitze 7 darauf geachtet, dass mit dem jeweiligen Schneid- bzw. Fräswerkzeug 12 lediglich Konturen eingearbeitet werden bzw. Vertiefungen 6 oder Schlitze 7 mit einer begrenzten Breite 16 erzeugt werden.

Praktikabel ist es dabei, wenn der Durchmesser des Schneid- bzw. Fräswerkzeuges 12 derart gewählt ist, dass er einer herzustellenden bzw. gewünschten Breite 16 der nutartigen Vertiefung 6 bzw. des herzustellenden Schlitzes 7 entspricht, wie dies in Fig. 8a schematisch veranschaulicht wurde. Es ist aber auch möglich, die Breite bzw. den Durchmesser des Schneid- bzw. Fräswerkzeuges 12 relativ schmal auszuwählen und durch wiederholte, seitliche versetzte Schneid- bzw. Fräsvorgänge die gewünschte bzw. benötigte Breite 16 der nutartigen Vertiefungen 6 bzw. Schlitze 7 zu schaffen. Die Breite 16 der nutartigen Vertiefungen 6 bzw. Schlitze 7 kann je nach Anwendungsfall bzw. je nach gewünschter Dicke der herzustellenden Begrenzungsschicht 21 (Fig. 9) in etwa zwischen 1mm und 30mm, insbesondere zwischen 2mm und 10 mm betragen. Der Durchmesser des eingesetzten Fräswerkzeuges 12 bzw. Bearbeitungsstrahles kann an die zu erzielende Breite 16 angepasst sein. Vor allem in Verbindung mit einer CNC-gesteuerten bzw. computergesteuerten Schneid- oder Fräsmaschine 10 kann auch vorgesehen sein, dass die in das Plattenelement 3 einzuarbeitenden Vertiefungen 6 bzw. Schlitze 7 in Bezug auf deren Längserstreckung eine abschnittsweise variierende Breite 16 aufweisen. Dadurch können unterschiedliche bzw. variierende Dickenverläufe der herzustellenden Begrenzungsschicht 21 (Fig. 8c; Fig. 9) geschaffen werden, wodurch technischen und wirtschaftlichen Anforderung optimiert entsprochen werden kann. Je nach Verwendungszweck bzw. Anforderungen an das herzustellende Bauelement 1 kann die verbleibende Stärke bzw. die endgültige Dicke der aus Kunststoff gebildeten Begrenzungsschicht 21 zwischen etwa 0,5mm und 30mm betragen.

Fig. 3 veranschaulicht in schematischer Art und Weise einen beispielhaften Vorgang zum zumindest teilweisen Befüllen oder Ausfüllen der zuvor erzeugten nutartigen Vertiefungen 6 bzw. Schlitze 7 im Plattenelement 3 mit einer im Verarbeitungszustand fließfähigen oder pastösen, nachfolgend aushärtenden oder aushärtbaren Füll- oder Klebemasse 13. Die entsprechende Füll- oder Klebemasse 13 kann dabei durch manuelle Vorgänge, wie zum Beispiel durch Verwendung von Spachtelwerkzeugen 17 (Fig. 3) und/oder durch Verwendung von Ausbring- bzw. Dosiervorrichtungen 18 (Fig. 5; Fig. 8b), insbesondere unter Verwendung von Düsen, in die zuvor erzeugten nutartigen Vertiefungen 6 bzw. Schlitze 7 eingebracht werden. Bei der in Fig. 3 dargestellten, maschinen- bzw. werkzeugtechnisch sehr einfach gehaltenen Ausführungsform werden vorrätig gehaltene Mengen an Füll- oder Klebermasse 13 rasch und auch ausreichend formfüllend in die jeweiligen Vertiefungen 6 bzw. Schlitze 7 des Plattenelements 3 eingedrückt. Bei dieser Ausführungsform sowie bei der nachfolgend beschriebenen Ausführungsform ist es auch möglich, dass das Einbringen der Füll- oder Klebemasse 13 nur in jenen Teilabschnitten der nutartigen Vertiefungen 6 bzw. Schlitze 7 erfolgt, in welchen später eine Versiegelung bzw. Beschichtung des herzustellenden Bauelements 1 benötigt bzw. gewünscht ist. Während die Ausführungsform gemäß Fig. 3 eine manuelle und hinsichtlich Maschineninvestitionen somit wenig kostenintensive Ausführungsform darstellt, ist in den Fig. 5 bzw. 8b eine Ausführungsform angedeutet, welche sich auf eine Ausbring- bzw. Dosiervorrichtung 18, gegebenenfalls mit Mischfunktion für eine mehrkomponentige Füll- oder Klebemasse 13, bezieht. Mit einer solchen, vergleichsweise automatisierten Ausführungsform können die jeweiligen Füll- und/oder Mischprozesse rasch und besonders prozessstabil ausgeführt werden. Die hierfür erforderlichen Investitionskosten sind jedoch vergleichsweise höher und somit erst ab einer gewissen Anzahl von zu bearbeitenden Werkstücken rentabel.

Das Aushärten bzw. das zumindest teilweise Erhärten der eingebrachten bzw. eingedrückten Füll- oder Klebemasse 13 kann durch einfaches Abwarten vorbestimmter bzw. benötigter Zeitspannen erfolgen. Anstelle einer solchen passiv umgesetzten Härtungsphase in Bezug auf die Füll- oder Klebemasse 13 ist es selbstverständlich auch möglich, die Füll- oder Klebemasse 13 durch zusätzliche Maßnahmen zu aktivieren bzw. den Erhärtungs- bzw. Aushärtungsvorgang durch Zusatzmaßnahmen zu beschleunigen. Hierfür können je nach Erfordernis bzw. je nach eingesetzter Füll- oder Klebemasse 13 definierte Einwirkungen von Energie, wie zum Beispiel UV-Strahlung und/oder Temperatur, vorgenommen werden.

Insbesondere kann die Aktivierung bzw. Aushärtung der beispielsweise zwei- oder mehrkomponentig zu verarbeitenden Füll- oder Klebemasse 13 gemäß beliebigen, aus dem Stand der Technik bekannten Prozeduren erfolgen. Wesentlich ist jedoch, dass die Füll- oder Klebemasse 13 in ihrem Verarbeitungs- bzw. Einbringungszustand ausreichend fließfähig bzw. pastös ist und so gut bzw. möglichst formfüllend und rasch in die jeweiligen, maschinell hergestellten, nutförmigen Vertiefungen 6 bzw. Schlitze 7 eingebracht werden kann. Weiters ist es wesentlich, dass die zeit- bzw. klimaabhängig und/oder durch sonstige Maßnahmen aktivierbzw. aushärtbare Füll- oder Klebemasse 13 an den Begrenzungsflächen 19 der nutartigen Vertiefungen 6 bzw. Schlitze 7 stark haftet, wenn die Endfestigkeit der Füll- oder Klebemasse 13 erreicht ist. Dieses aktive Herstellen bzw. passive Abwarten eines zumindest teilweise erhärteten Zustandes der Füll- oder Klebemasse 13 bewirkt, dass die Füll- oder Klebemasse 13 eine Art von Füllschicht 20 in den nutartigen Vertiefungen 6 bzw. Schlitzen 7 des Plattenelements 3 ausbildet, wie dies in Fig. 4, Fig. 6 und Fig. 8c schematisch veranschaulicht wurde. Die zumindest teilweise erhärtete Füllschicht 20, welche zumindest in Teilabschnitten der nutartigen Vertiefungen 6 bzw. Schlitze 7 eingebracht bzw. vorhanden ist, stellt letztendlich eine Überzugsschicht, insbesondere in Art einer Deckschicht bzw. Versiegelung, am späteren, herzustellenden Bauelement 1 dar. Insbesondere stellt die in die nutartigen Vertiefungen 6 bzw. in die Schlitze 7 eingebrachte Füll- oder Klebemasse 13 und die daraus gebildete, erhärtete Füllschicht 20 nachfolgend eine Versiegelung bzw. Beschichtung an zumindest einzelnen Abschnitten der Schmalfläche 32 (Fig. 9) des herzustellenden Bauelements 1 bzw. Rahmen-Halbfabrikats 2 dar.

In weiterer Folge wird nämlich - wie am besten aus Fig. 4 beispielhaft ersichtlich ist - eine Entfernung jener Plattenabschnitte des Plattenelements 3 vorgenommen, welche letztendlich keinen Bestandteil des gewünschten bzw. benötigten Bauelements 1 bzw. Rahmen-Halbfabrikats 2 (Fig. 9) darstellen. Diese Entfernung von gewissermaßen nicht erforderlichen Plattenabschnitten erfolgt vorzugsweise durch Schneid- bzw. Fräsvorgänge. Hierzu kann erneut die in den Fig. 1, 2 dargestellte Schneid- oder Fräsmaschine 8 bzw. ein korrespondierender Industrieroboter mit entsprechenden Bearbeitungswerkzeugen, beispielsweise einem Schneid- bzw. Fräswerkzeug 12, eingesetzt werden. Die entsprechende Entfernung nicht benötigter bzw. quasi überschüssiger Plattenabschnitte wird derart vorgenommen, dass die zuvor hergestellte bzw. eingebrachte Füllschicht 20 zumindest in Teilabschnitten der letztendlichen Begrenzungs- oder Umrisskontur des herzustellenden Bauelements 1 bzw. Rahmen-Halbfabrikats 2 erhalten bleibt und so eine äußere Begrenzungsschicht 21 am herzustellenden Bauelement 1 bzw. Rahmen-Halbfabrikats 2 ausbildet bzw. darstellt. Bevorzugt werden zum Entfernen überschüssiger bzw. abzuschneidender Plattenabschnitte manuell und/oder steuerungstechnisch geführte Fräsvorgänge ausgeführt. Gegebenenfalls sind auch Schneidvorgänge, wie zum Beispiel Laserschneidprozesse oder Wasserstrahlschneidprozesse, ausführbar. Wesentlich ist, dass der jeweilige Schneid- bzw. Fräsvorgang mittels der Schneid- bzw. Fräsvorrichtung 8 bzw. mittels einem korrespondierenden Industrieroboter zumindest abschnittsweise bzw. wenigstens partiell innerhalb der durch die Füll- oder Klebemasse 13 definierten, zumindest teilweise erhärteten Füllschicht 20 ausgeführt wird, wie dies beispielhaft in Fig. 4 veranschaulicht ist.

Das eingesetzte Fräswerkzeug 12 kann - wie in Fig. 4 in strichlierten Linien dargestellt - als Konturfräser ausgeführt sein und weist somit eine konturierte Mantelfläche auf. Dies im Gegensatz zu einem sogenannten Stiftfräser mit zylindrischer bzw. im Wesentlichen zylindrischer Mantelfläche. Wie weiters aus Fig. 4 ersichtlich ist, können im Zuge der Entfernung bzw. Abtrennung nicht benötigter, beispielsweise randseitiger Plattenabschnitte, oder auch im Zuge der Ausführung eines gesonderten Verfahrensschrittes, räumlich geformte, beispielsweise bombierte, Begrenzungsflächen 22 (Fig. 4; Fig. 8c) an einer außen und/oder innen liegenden Begrenzungsschicht 21 des Bauelements 1 bzw. des Rahmen-Halbfabrikats 2 hergestellt werden. Hierfür kann ein entsprechender Konturfräser als Fräswerkzeug 12 eingesetzt werden. Anstelle solcher Fräsvorgänge ist es auch möglich, diese im Querschnitt konturierten Begrenzungsschichten 21 bzw. die räumlich geformten Begrenzungsflächen 22 an der Begrenzungsschicht 21 durch Schneid- und/oder Schleifvorgänge zu erzeugen. Ebenso ist es möglich, ebene bzw. im Querschnitt geradlinige Begrenzungsflächen 22 and der Begrenzungsschicht 21 umzusetzen, wie dies im rechten Abschnitt von Fig. 9 beispielhaft veranschaulicht ist.

Das zum gewünschten bzw. benötigten Bauelement 1 zu verarbeitende Plattenelement 3 (Halbzeug, Rohmaterial, Rohling) kann einschichtig ausgeführt sein bzw. durch einen in sich weitestgehend homogenen bzw. homogen verteilten Werkstoff gebildet sein. Besondere Vorteile der Erfindung können aber insbesondere dann zum Tragen kommen, wenn das bereitgestellte Plattenelement 3 durch ein mehrschichtiges Plattenelement 3 definiert ist, insbesondere durch eine Mehrschicht-Verbundplatte 23 gebildet ist, wie dies in den Fig. 4 bis 9 schematisch veranschaulicht wurde. Insbesondere ist es zweckmäßig, wenn das bereitgestellte Plattenelement 3 zumindest zweischichtig, bevorzugt zumindest dreischichtig aufgebaut ist. Insbesondere kann wenigstens eine Kernschicht 24 vorgesehen sein, welche aus einem Werkstoff mit relativ geringer Dichte besteht. Demgegenüber kann die wenigstens eine Deckschicht 25, 26 im Vergleich zur Kernschicht 24 aus einem Werkstoff bzw. Material mit vergleichsweise hoher Dichte bzw. hoher Festigkeit gebildet sein. Beispielsweise kann die Mehrschicht-Verbundplatte 23 eine relativ leichtgewichtige Kernschicht 24, beispielsweise aus geschäumten Polyurethan, aufweisen und einander gegenüberliegende Deckschichten 25, 26 können aus einem Material mit vergleichsweise hoher Dichte, wie zum Beispiel Polyamid, Carbon, Aluminium oder einem sonstigen Leichtmetall, gebildet sein.

Die Kernschicht 24 und/oder wenigstens eine Deckschicht 25, 26 des Plattenelements 3 kann aber auch durch unterschiedliche Hölzer (Holzarten) gebildet sein. Insbesondere kann die Kernschicht 24 aus einem Holz mit relativ geringer Dichte, wie zum Beispiel Fichte, Weide, Pappel oder dergleichen, gebildet sein, während die wenigstens eine Deckschicht 25, 26 aus Holz mit relativ hoher Dichte, wie zum Beispiel Esche, Buche, Eiche oder dergleichen, gebildet sein kann. Der jeweilige Schichtaufbau hängt dabei primär von den erforderlichen Festigkeits- bzw. Stabilitätswerten ab und kann auch von allfälligen Gewichts- bzw. Umweltanforderungen und/oder von Umwelteinflüssen abhängig gemacht werden. Zweckmäßig ist es, wenn die Mehrschicht-Verbundplatte 23 aus Schichten, insbesondere aus wenigstens einer Kernschicht 24 und aus wenigstens einer Deckschicht 25, 26 besteht, welche ausgewählt sind aus der Gruppe der Materialien umfassend Holz, Schaumkunststoff, beispielsweise PU-Schäume, Hartkunststoff und Carbonfasern bzw. Carbon-Werkstoffen. Mittels den angegebenen Aufbau- bzw. Verarbeitungsmaßnahmen kann an einer dementsprechenden, mehrschichtigen Verbundplatte 23 eine Versiegelung bzw. Beschichtung an dessen gegebenenfalls stark konturierten Schmalflächen 32 (Fig. 9) geschaffen werden und so ein optisch ansprechendes und/oder technisch optimiertes und/oder besonders widerstandsfähiges Bauelement 1, insbesondere ein Rahmen-Halbfabrikat 2 bzw. eine endausgeführte Rahmenkomponente hergestellt werden. Dieser Herstellungsprozess umfasst dabei die technische Maßnahme, dass unter Ausnutzung der Begrenzungsflächen 19 von maschinell eingearbeiteten, nutartigen Vertiefungen 6 oder Schlitzen 7 im Plattenelement 3 eine temporäre Einweg-Gießform bzw. eine zu verwerfende Einmal-Gießkontur geschaffen wird, in welche nachfolgend bzw. späterhin die Füll- oder Klebemasse 13 praktikabel eingegossen werden kann, wie dies beispielhaft den Fig. 8a bis 8c sowie den Fig. 5, 6 und 7 entnehmbar ist.

Die Füll- oder Klebemasse 13 soll dabei in ihrem Ursprungs- bzw. Verarbeitungszustand ausreichend fließfähig bzw. pastös sein. Besonders geeignet sind hierfür Füll- oder Klebemassen 13 aus einem Kunststoffmaterial. Verwend- bzw. einsetzbar sind hierfür vor allem Kunststoffmaterialien ausgewählt aus der Gruppe umfassend Epoxidharze, PU-Harze, Polyester-Harze und schäumbare Harze, insbesondere PU-Schäume.

In Fig. 8b ist schematisch gezeigt, wie eine solche ursprünglich fließfähige bzw. pastöse Füll- oder Klebemasse 13 in eine nutartige Vertiefung 6 eingebracht werden kann, wobei diese Füll- oder Klebemasse 13 die nutartige Vertiefung 6 formfüllend ausfüllt und dabei an den Begrenzungsflächen 19 der nutartigen Vertiefung 6 anliegt und späterhin ausreichend stark daran anhaftet.

Fig. 8c zeigt, dass nach gewisser Erhärtung bzw. Aushärtung dieser Füll- oder Klebemasse 13 eine Füllschicht 20 definiert ist, welche durch nachfolgende Fräs- bzw. Schneidvorgänge letztendlich eine gewünschte Versiegelungs- bzw. Begrenzungsschicht 21 am herzustellenden Bauelement 1 ausbildet. Insbesondere kann durch geeignete Wahl von Schneid- bzw. Fräswerkzeugen 12 und/oder durch maschinengestützte bzw. gesteuerte Bearbeitungsvorgänge eine gewölbte bzw. im Querschnitt bombierte oder anderweitig konturierte Begrenzungsfläche 22, insbesondere eine räumlich geformte Fläche, an der Schmalseite bzw. Schmalfläche 32 des herzustellenden Bauelements 1 geschaffen werden (Fig. 8c; Fig. 9). Dabei kann, wie aus Fig. 8c ersichtlich ist, auch vorgesehen sein, dass zumindest in Übergangsabschnitten 27, 28 zwischen der durch die Füll- oder Klebemasse 13 definierten, äußeren Begrenzungsschicht 21 und den Seitenflächen 29, 30 des herzustellenden Bauelements 1 definierte Schleif-, Schneid- und/oder Fräsvorgänge ausgeführt werden, sodass geglättete, kantenfreie und/oder stufenlose Materialübergänge ausgebildet werden. Die spätere Oberfläche bzw. die beispielhaft herzustellende Begrenzungsfläche 22 kann, wie in Fig. 8c dargestellt ist, durch eine gerundete Schmalfläche 32 des herzustellenden Bauelements 1 gebildet sein, wobei diese Rundung bzw. der Übergangsradius zumindest teilweise in wenigstens einer der Deckschichten 25, 26 des herzustellenden Bauelements 1 übergehen kann.

In Fig. 9 ist ein zweckmäßiges Ausführungsbeispiel eines brett- oder plattenartigen Bauelements 1 schematisch gezeigt. Insbesondere kann dieses Bauelement 1 als Rahmen-Halbfabrikat 2 zur Bildung eines Fahrradrahmens eingesetzt werden. Dieses Bauelement 1 bzw. Rahmen-Halbfabrikat 2 ist dabei aus dem beschriebenen Plattenelement 3 gebildet, welches schlussendlich einen Tragkörper 31, insbesondere einen Rahmenkörper bzw. ein Rahmenelement definiert. Die seitlichen bzw. einander gegenüberliegenden Seitenflächen 29, 30 des Tragkörpers 31 sind durch Teilbereiche der Flachseiten bzw. Plattenoberflächen 4, 5 des Plattenelements 3 gebildet. Die Schmalflächen 32 bzw. zumindest einzelne Schmalflächen 32 des Tragkörpers 31 sind durch eine Dicke 33 des Plattenelements 3 definiert bzw. bestimmt.

Der Tragkörper 31 weist dabei in Bezug auf seine Seitenansicht - beispielsweise gemäß Fig. 1 oder Fig. 3 - eine Begrenzungs- oder Umrisskontur auf, die durch eine Mehrzahl von geradlinig und/oder gekrümmt verlaufenden Konturabschnitten zusammengesetzt bzw. gebildet ist. Zumindest in einzelnen Abschnitten oder innerhalb des gesamten Verlaufes dieser Begrenzungs- oder Umrisskontur des letztendlichen Tragkörpers 31 ist eine Begrenzungsschicht 21 aus Kunststoffmaterial ausgebildet. Diese Begrenzungsschicht 21 ist durch Angießen bzw. Aufbringen einer im Verarbeitungszustand fließfähigen bzw. pastösen, nachfolgend aushärtenden oder aushärtbaren Füll- oder Klebemasse 13 an den Konturen bzw. Schmalflächen 32 des Tragkörpers 31 aufgebaut. Diese somit durch einen Gieß- bzw. Angießvorgang angebrachte Füll- oder Klebemasse 13 ist dabei in ihrem zumindest teilweise erhärteten Zustand durch nachfolgende Fräs-, Schneid- und/oder Schleifvorgänge hinsichtlich ihrer Oberflächenbeschaffenheit bearbeitet und/oder hinsichtlich ihrer Querschnittsgeometrie modelliert worden. Daraus ergibt sich die letztendliche Schmalflächen-Kontur bzw. die gewünschte Schmalfläche 32 des herzustellenden Bauelements 1 bzw. Rahmen-Halbfabrikats 2.

In den Fig. 5 bis 7 ist beispielhaft gezeigt, dass die nutartigen Vertiefungen 6 bzw. die hierin dargestellten Schlitze 7 anstelle von geradlinigen bzw. ebenen Begrenzungsflächen 19 (Fig. 1 - 4) auch Begrenzungsflächen 19 aufweisen können, welche Hinterschneidungen 34 (Fig. 6) und/oder oberflächenvergrößernde Strukturen 35 (Fig. 5; Fig. 7), beispielsweise Einschnitte oder Vertiefungen, aufweisen können. Derartige Hinterschneidungen 34 bzw. oberflächenvergrößernde Strukturen 35 ermöglichen eine hochfeste bzw. quasi formschlüssige Verbindung zwischen der Füllschicht 20 bzw. dessen ursprünglicher Füll- oder Klebemasse 13 und den entsprechenden Begrenzungsflächen 19 der nutartigen Vertiefungen 6 bzw. Schlitze 7 im Plattenelement 3.

In Fig. 5 ist beispielhaft veranschaulicht, wie sogar Durchbrüche bzw. durchgängige Schlitze 7 im Plattenelement 3 problemlos mit der im Verarbeitungszustand fließfähigen bzw. pastösen Füll- oder Klebemasse 13 ausgefüllt werden können. Hierzu wird das Plattenelement 3 beispielsweise auf einen Maschinentisch 10 oder eine sonstige Auflagefläche bzw. Unterlegplatte aufgelegt, wodurch ein Ausfließen bzw. unerwünschtes Austreten der Füll- oder Klebemasse 13 während ihres fließfähigen bzw. pastösen Zustandes hintan gehalten bzw. unterbunden werden kann. Die in den Fig. 5 bis 7 beispielhaft dargestellten Hinterschneidungen 34 bzw. Strukturen 35 ermöglichen eine besonders abreißfeste Anbringung der Füllschicht 20 an den Begrenzungsflächen 19 der nutartigen Vertiefungen 6 bzw. Schlitze 7 bzw. kann dadurch die Begrenzungsschicht 21 an den späteren Schmalflächen 32 des herzustellenden Bauelements 1 - Fig. 4; Fig. 9 - besonders stabil und dauerhaft befestigt werden. In Fig. 6 ist mit strichlierten Linien eine weitere denkbare Begrenzungsfläche 22 des letztendlichen bzw. halbfertigen Bauelements 1 bzw. Rahmen-Halbfabrikats 2 mit strichlierten Linien veranschaulicht worden. Diese Begrenzungsfläche 22 kann durch Fräs-, Schneid- und/oder Schleifvorgänge oder durch sonstige mechanische Bearbeitungsprozesse geschaffen werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Bauelement | 29 | Seitenfläche |
| 2 | Rahmen-Halbfabrikat | 30 | Seitenfläche |
| 3 | Plattenelement | 31 | Tragkörper |
| 4 | Plattenoberfläche | 32 | Schmalfläche |
| 5 | Plattenoberfläche | 33 | Dicke |
| 6 | Vertiefungen (nutartig) | 34 | Hinterschneidung |
| 7 | Schlitze | 35 | Strukturen |
| 8 | Schneid- oder Fräsmaschine | | |
| 9 | Steuervorrichtung | | |
| 10 | Maschinentisch | | |
| 11 | Bearbeitungskopf | | |
| 12 | Fräswerkzeug | | |
| 13 | Füll- oder Klebemasse | | |
| 14 | Durchbruch | | |
| 14a | Kernteil | | |
| 15 | Durchbruch | | |
| 15a | Kernabschnitt | | |
| 16 | Breite | | |
| 17 | Spachtelwerkzeug | | |
| 18 | Ausbring- bzw. Dosiervorrichtung | | |
| 19 | Begrenzungsflächen | | |
| 20 | Füllschicht | | |
| 21 | Begrenzungsschicht | | |
| 22 | Begrenzungsfläche | | |
| 23 | Mehrschicht-Verbundplatte | | |
| 24 | Kernschicht | | |
| 25 | Deckschicht | | |
| 26 | Deckschicht | | |
| 27 | Übergangsabschnitt | | |
| 28 | Übergangsabschnitt | | |

## Patentansprüche

1. Verfahren zum Herstellen eines brett- oder plattenartigen Bauelements (1), insbesondere eines Rahmen-Halbfabrikats (2), welches beispielsweise zur Ausbildung eines Fahrradrahmens vorgesehen ist, umfassend die folgenden Verfahrensschritte:
- Bereitstellen eines Plattenelements (3) welches einander gegenüberliegende Plattenoberflächen (4, 5) aufweist;
- Einbringen oder Einarbeiten von nutartigen Vertiefungen (6) oder Schlitzen (7) in das Plattenelement (3) ausgehend von wenigstens einer der Plattenoberflächen (4, 5) des Plattenelements (3), wobei ein Verlauf der nutartigen Vertiefungen (6) oder Schlitze (7) im Plattenelement (3) der gewünschten Begrenzungs- oder Umrisskontur oder der benötigten Geometrie des Bauelements (1) entspricht oder zumindest annähernd entspricht;
- zumindest teilweises Befüllen oder Ausfüllen der nutartigen Vertiefungen (6) oder Schlitze (7) mit einer im Verarbeitungszustand fließfähigen oder pastösen, nachfolgend aushärtenden oder aushärtbaren und dabei an Begrenzungsflächen (19) der nutartigen Vertiefungen (6) oder Schlitze (7) anhaftenden Füll- oder Klebemasse (13);
- Herstellen oder Abwarten eines zumindest teilweise erhärteten Zustandes der Füll- oder Klebemasse (13), sodass die Füll- oder Klebemasse (13) eine Füllschicht (20) in den nutartigen Vertiefungen (6) oder Schlitzen (7) des Plattenelements (3) ausbildet;
- Entfernen jener Plattenabschnitte, welche keinen Bestandteil des herzustellenden Bauelements (1) darstellen, wobei die Entfernung nicht benötigter Plattenabschnitte derart vorgenommen wird, dass die Füllschicht (20) zumindest in Teilabschnitten der Begrenzungs- oder Umrisskontur des herzustellenden Bauelements (1) erhalten bleibt und eine äußere Begrenzungsschicht (21) ausbildet.

2. Verfahren nach Anspruch 1, **dadurch gekennzeichnet, dass** mittels einer programmgesteuerten Schneid- oder Fräsmaschine (8) oder mittels einem ein Bearbeitungswerkzeug führenden Industrieroboter individuell veränder- oder anpassbare Verläufe der nutartigen Vertiefungen (6) oder Schlitze (7) im Plattenelement (3) hergestellt werden.

3. Verfahren nach Anspruch 1 oder 2, **dadurch gekennzeichnet, dass** mittels der genannten programmgesteuerten Schneid- oder Fräsmaschine (8) oder mittels einer weiteren programmgesteuerten Schneid- oder Fräsmaschine (8), oder mittels dem genannten Industrieroboter oder mittels einem weiteren ein Bearbeitungswerkzeug führenden Industrieroboter Schneid- oder Fräsvorgänge zum Entfernen jener Plattenabschnitte ausgeführt werden, welche nicht als Bestandteil des herzustellenden Bauelements (1) gelten, wobei der Schneid- oder Fräsvorgang zumindest abschnittsweise innerhalb der durch die Füll- oder Klebemasse (13) definierten Füllschicht (20) ausgeführt wird.

4. Verfahren nach einem oder mehreren der vorhergehenden Ansprüche, **dadurch gekennzeichnet, dass** im Zuge der Entfernung nicht benötigter Plattenabschnitte, oder im Zuge eines gesonderten Verfahrensschrittes, räumlich geformte, beispielsweise bombierte, Begrenzungsflächen (22) an der äußeren Begrenzungsschicht (21) hergestellt werden, insbesondere durch Fräs-, Schneid- und/oder Schleifvorgänge erzeugt werden.

5. Verfahren nach einem oder mehreren der vorhergehenden Ansprüche, **gekennzeichnet durch** Bereitstellen eines mehrschichtigen Plattenelements (3), insbesondere einer Mehrschicht-Verbundplatte (23) mit Schichten ausgewählt aus der Gruppe umfassend Holz, Schaumkunststoff, Hartkunstoff und Carbonfasern.

6. Verfahren nach einem oder mehreren der vorhergehenden Ansprüche, **dadurch gekennzeichnet, dass** basierend auf den Begrenzungsflächen (19) der nutartigen Vertiefungen (6) oder Schlitze (7) eine temporäre Einweg-Gießform geschaffen wird, in welche nachfolgend die aushärtende oder aushärtbare Füll- oder Klebemasse (13) eingegossen wird.

7. Verfahren nach einem oder mehreren der vorhergehenden Ansprüche, **dadurch gekennzeichnet, dass** als Füll- oder Klebemasse (13) ein Kunststoffmaterial ausgewählt aus der Gruppe umfassend Epoxidharze, PU-Harze, Polyesterharze und schäumbare Harze, insbesondere PU-Schäume, eingesetzt wird.

8. Verfahren nach einem oder mehreren der vorhergehenden Ansprüche, **dadurch gekennzeichnet, dass** zumindest in Übergangsabschnitten (27, 28) zwischen der durch die Füll- oder Klebemasse (13) gebildeten, äußeren Begrenzungsschicht (21) und den Seitenflächen (29, 30) des Bauelements (1) Schleif-, Schneid- und/oder Fräsvorgänge ausgeführt werden, sodass geglättete, kantenfreie und/oder stufenlose Materialübergänge ausgebildet werden.

## Claims

1. A method for producing a board-like or plate-like component (1), in particular a semi-finished frame (2), which is intended, for example for forming a bicycle frame, comprising the following method steps:
- providing a plate element (3), which has opposing plate surfaces (4, 5);
- introducing or working in groove-like indentations (6) or slots (7) into the plate element (3) starting from at least one of the plate surfaces (4, 5) of the plate element (3), wherein a course of the groove-like indentations (6) or slits (7) in the plate element (3) corresponds to or at least approximately corresponds to the desired boundary or outline contour or to the required geometry of the component (1);
- at least partially filling or filling up the groove-like indentations (6) or slots (7) with a filler or an adhesive substance (13) that is fluid or pasty in the processing condition, subsequently curing or curable and, in doing so, adhering to the boundary surfaces (19) of the groove-like indentations (6) or slots (7);
- producing or waiting for an at least partially cured state of the filler or adhesive substance (13), so that the filler or adhesive substance (13) forms a filling layer (20) in the groove-like indentations (6) or slots (7) of the plate element (3);
- removing those plate sections which do not constitute a part of the component (1) to be produced, wherein the removal of plate sections that are not required is carried out such that the filling layer (20) remains intact at least in partial sections of the boundary or outline contour of the component (1) to be produced and forms an outer boundary layer (21).

2. The method according to claim 1, **characterized in that** individually modifiable or adaptable courses of the groove-like indentations (6) or slots (7) in the plate element (3) are produced by means of a program-controlled cutting or milling machine (8) or by means of an industrial robot guiding a processing tool.

3. The method according to claim 1 or 2, **characterized in that**, by means of said program-controlled cutting or milling machine (8), or by means of a further program-controlled cutting or milling machine (8), or by means of said industrial robot, or by means of a further industrial robot guiding a processing tool, cutting or milling operations are executed for removing those plate sections which are not considered to be part of the component (1) to be produced, wherein the cutting or milling operation is carried out, at least in sections, inside the filling layer (20) defined by the filler or adhesive substance (13).

4. The method according to one or multiple of the preceding claims, **characterized in that** in the course of the removal of plate sections which are not required, or in the course of a separate method step, spatially formed, for example cambered, boundary surfaces (22) are produced, in particular created by means of milling, cutting and/or grinding operations, on the outer boundary layer (21).

5. The method according to one or multiple of the preceding claims, **characterized by** providing a multi-layer plate element (3), in particular a multi-layer composite panel (23) with layers selected from the group comprising wood, foam plastic, rigid plastic and carbon fibers.

6. The method according to one or multiple of the preceding claims, **characterized in that**, based on the boundary surfaces (19) of the groove-like indentations (6) or slots (7), a temporary single-use casting mold is created, into which the curing or curable filler or adhesive substance (13) is subsequently poured.

7. The method according to one or multiple of the preceding claims, **characterized in that** a plastic material selected from the group comprising epoxy resins, PU resins, polyester resins and foamable resins, in particular PU foams, are used as the filler or adhesive substance (13).

8. The method according to one or multiple of the preceding claims, **characterized in that** at least in transition sections (27, 28) between the outer boundary layer (21), formed by the filler or adhesive substance (13), and the side surfaces (29, 30) of the component (1), grinding, cutting and/or milling operations are carried out, so that smoothed, edge-free and/or stepless material transitions are formed.

## Revendications

1. Procédé de fabrication d'un élément de construction en forme de planche ou de plaque (1) plus particulièrement d'un produit semi-fini de type cadre (2), qui est prévu par exemple pour la réalisation d'un cadre de vélo, comprenant les étapes suivantes :
- mise à disposition d'un élément en forme de plaque (3) qui comprend des surfaces de plaques (4, 5) en face l'une de l'autre ;
- réalisation ou insertion de cavités (6) en forme de rainures ou de fentes (7) dans l'élément en forme de plaque (3) à partir d'au moins une des surfaces de plaques (4, 5) de l'élément en forme de plaque (3), dans lequel une extension des cavités (6) en forme de rainures ou des fentes (7) dans l'élément en forme de plaque (3) correspond ou correspond de manière au moins approximative au contour de limitation souhaité ou à la géométrie requise de l'élément de construction (1) ;
- remplissage au moins partiel des cavités (6) en forme de rainures ou des fentes (7) avec une masse de remplissage ou adhésive (13) fluide ou pâteuse dans l'état de traitement, puis durcissante ou durcissable et adhérant donc à des surfaces de limitation (19) des cavités (6) en forme de rainures ou des fentes (7) ;
- réalisation ou attente d'un état durci au moins partiel de la masse de remplissage ou adhésive (13), de façon à ce que la masse de remplissage ou adhésive (13) constitue une couche de remplissage (20) dans les cavités (6) en forme de rainures ou les fentes (7) de l'élément en forme de plaque (3) ;
- élimination des sections de plaques qui ne font pas partie intégrante de l'élément de construction (1) à fabriquer, dans lequel l'élimination des sections de plaques non nécessaires est effectuée de façon à ce que la couche de remplissage (20) reste au moins dans des parties du contour de limitation de l'élément de construction (1) à fabriquer et constitue une couche de limitation externe (21).

2. Procédé selon la revendication 1, **caractérisé en ce que**, au moyen d'une machine de coupe ou de fraisage (8) ou au moyen d'un robot industriel guidant un outil d'usinage, des extensions modifiables ou adaptables individuellement des cavités (6) en forme de rainures ou des fentes (7) dans l'élément en forme de plaque (3) sont réalisées.

3. Procédé selon la revendication 1 ou 2, **caractérisé en ce que**, au moyen de la machine de coupe ou de fraisage (8) ou au moyen d'une autre machine de coupe ou de fraisage (8) contrôlée par un programme, ou au moyen du robot industriel mentionné ou au moyen d'un autre robot industriel guidant un outil d'usinage, des processus de coupe ou de fraisage sont exécutés pour l'élimination des sections de plaques qui ne font pas partie intégrante de l'élément de construction (1) à fabriquer, dans lequel le processus de coupe ou de fraisage est exécuté au moins à certains endroits à l'intérieur de la couche de remplissage (20) définie par la masse de remplissage ou adhésive (13).

4. Procédé selon l'une ou plusieurs des revendications précédentes, **caractérisé en ce que**, au cours de l'élimination des sections de plaques non nécessaires, ou au cours d'une étape de procédé distincte, des surfaces de limitation (22) façonnées dans l'espace, par exemple bombées, sont réalisées sur la couche de limitation externe (21), plus particulièrement sont réalisées par des processus de fraisage, de coupe et/ou de meulage.

5. Procédé selon l'une ou plusieurs des revendications précédentes, **caractérisé par** la mise à disposition d'un élément en forme de plaque multicouche (3), plus particulièrement d'une plaque composite multicouche (23) avec des couches sélectionnées dans le groupe comprend le bois, une matière plastique alvéolaire, une matière plastique dure et des fibres de carbone.

6. Procédé selon l'une ou plusieurs des revendications précédentes, **caractérisé en ce que**, sur la base des surfaces de limitation (19) des cavités (6) en forme de rainures ou des fentes (7), un moule temporaire à usage unique est créé, dans lequel la masse de remplissage ou adhésive (13) durcissante ou durcissable est ensuite coulée.

7. Procédé selon l'une ou plusieurs des revendications précédentes, **caractérisé en ce que**, en tant que masse de remplissage ou adhésive (13), une matière plastique sélectionnée dans le groupe comprenant des résines époxy, des résines PU, des résines polyester et des résines alvéolaires, plus particulièrement des mousses PU, est utilisée.

8. Procédé selon l'une ou plusieurs des revendications précédentes, **caractérisé en ce que**, au moins dans des sections de transition (27, 28), entre la couche de limitation externe (21) formée par la masse de remplissage ou adhésive (13) et les surfaces latérales (29, 30) de l'élément de construction (1), des processus de meulage, de coupe et/ou de fraisage sont exécutés, de façon à ce que des transitions de matériaux lissées, sans arêtes et/ou sans épaulement soient formées.
